Europäisches Patentamt

European Patent Office

Office européen des brevets

(19)

(11) Veröffentlichungsnummer: **0 185 316**
**B1**

(12) **EUROPÄISCHE PATENTSCHRIFT**

(45) Veröffentlichungstag der Patentschrift:
02.05.90

(51) Int. Cl.⁴: **A23G 3/26**

(21) Anmeldenummer: **85115849.3**

(22) Anmeldetag: **12.12.85**

(54) **Dragiertrommel.**

(30) Priorität: **13.12.84 DE 3445515**

(43) Veröffentlichungstag der Anmeldung:
**25.06.86 Patentblatt 86/26**

(45) Bekanntmachung des Hinweises auf die Patenterteilung:
**02.05.90 Patentblatt 90/18**

(84) Benannte Vertragsstaaten:
**AT BE CH DE FR GB IT LI LU NL SE**

(56) Entgegenhaltungen:
**EP-A- 0 123 975**
**FR-A- 2 228 437**
**FR-A- 2 416 740**
**FR-A- 2 505 613**
**GB-A- 1 106 575**
**US-A- 3 167 035**
**US-A- 3 390 648**

(73) Patentinhaber: **DRIAM Metallprodukt GmbH & Co. KG,
Aspenweg 19, D-7991 Eriskirch(DE)**

(72) Erfinder: **Dunajtschik, Rudolf, Flurstrasse 20,
D-8990 Lindau (B)(DE)**

(74) Vertreter: **Riebling, Peter, Dr.-Ing., Patentanwalt,
Rennerle 10, Postfach 31 60, D-8990 Lindau/B.(DE)**

## Beschreibung

Die Erfindung betrifft eine Dragiertrommel nach dem Oberbegriff des Patentanspruchs 1.

Eine derartige Dragiertrommel ist bereits aus der USA 3 167 035 bekannt. Bei dieser bekannten Dragiertrommel werden aber stets dieselben Kerne nacheinander durch Behandlungsräume geführt zwecks entsprechender Behandlung. Unterschiedliche Chargen gleichzeitig können demnach in der bekannten Dragiertrommel nicht vollständig behandelt werden.

Weiterhin ist es bei der bekannten Dragiertrommel nicht möglich, das Dragiergut in anzustrebender Weise in der Mitte jeder Sektion zusammenzuballen.

Die vorliegende Erfindung hat daher die Aufgabe, eine Dragiertrommel der eingangs genannten Art so weiterzubilden, daß mit ein und derselben Dragiertrommel unterschiedliche Chargen von zu beschichtenden Kernen mit unterschiedlichen Materialien beschichtet werden können.

Zur Lösung der gestellten Aufgabe sind die Merkmale des kennzeichnenden Teils des Patentanspruchs 1 vorgesehen.

Wesentliches Merkmal der vorliegenden Erfindung ist also, daß in ein und derselben Dragiertrommel mehrere Kerne gleichzeitig behandelt werden können. Dies ist besonders vorteilhaft, wenn es darum geht, zu beschichtende Kerne mit unterschiedlichen Farben zu versehen. Für beispielsweise sechs verschiedene Farben brauchte man hierzu früher sechs verschiedene Dragiertrommeln mit sämtlichen zugeordneten Einrichtungen, wie z. b. Zuführvorrichtungen, luft- und wassertechnischen Einrichtungen, Antrieb, Steuerung und dergleichen.

Bei der vorliegenden Erfindung entfällt dieser Geräteaufwand, denn es wird nur eine einzige Dragiertrommel benötigt, dabei ist es wesentlich, daß die lufttechnische Einrichtung gleichzeitig für sämtliche Trommelsektionen wirksam ist und hierdurch wesentlicher Geräteaufwand gespart wird. Eine erfindungsgemäße Dragiertrommel arbeitet also wesentlich wirtschaftlicher als bekannte Dragiertrommeln, welche zur unterschiedlichen Behandlung der zu beschichtenden Kerne eine Vielzahl von Dragiertrommeln benötigt. Es entfallen damit auch Transportprobleme, Behandlungsprobleme des Materials, Zwischenlagerungen und Reinigungs- und Spülungsprobleme, denn die zu behandelnden Materialien werden in ein und derselben Dragiertrommel im Bereich unterschiedlicher Trommelsektionen unterschiedlich behandelt.

Voraussetzung für eine derartige Unterteilung einer Dragiertrommel ist, daß man relativ große Chargen fahren kann. Dies gelingt dadurch, daß die Luft von der Trommelaußenseite hin in Richtung radial zur Trommelachse eingeblasen wird, und dadurch die zu beschichtenden Kerne von dem Luftpolster angehoben werden und sich im wesentlichen nicht berühren, so daß es auch bei großen Chargengrößen nicht zu einer Beschädigung der zu beschichtenden Kerne kommt.

Bei der erfindungsgemäß sektionsweise unterteilten Dragiertrommel werden die Luftströme in den einzelnen Trommelsektionen so geführt, daß die zu beschichtenden Kerne jeweils zur Mitte der Trommelsektion hin geführt werden, so daß sie nicht an der Trennwand verbleiben und möglicherweise über eine zentral in der Trennwand angeordnete Durchbrechung, durch welche der Sprüharm greift, in die benachbarte Trommelsektion gelangen. Durch die kreisförmige Luftführung in jeder Trommelsektion wird erreicht, daß der in der jeweiligen Trommelsektion erzeugte Sprühnebel nicht in die benachbarte Trommelsektion gelangen kann. Die Luftströme werden pro Trommelsektion so gerichtet, daß sie stets in Richtung der Mittenlängsachse konzentriert werden, so daß eine bestimmte Abschirmwirkung in Richtung zur Trennwand vorhanden ist, weil die Trennwand selbst nicht mit der Luftströmung beaufschlagt wird.

Weitere Merkmale der Erfindung sind Gegenstand der Ansprüche 2–8.

Es ziegen:

Figur 1: Schnitt durch eine Dragiertrommel nach der Erfindung,

Figur 2: Stirnansicht auf die Dragiertrommel nach Figur 1 in Richtung des Pfeiles II,

Figur 3: Vorderansicht der Trennwand nach Figur 2,

Figur 4: Schnitt gemäß der Linie IV-IV in Figur 3 durch die Befestigung der Trennwand,

Figur 5: Schnitt gemäß der Linie V-V in Figur 3,

Figur 6: schematisiert gezeichnete perspektivische Darstellung eines sektionsweise unterteilten Sprüharmes.

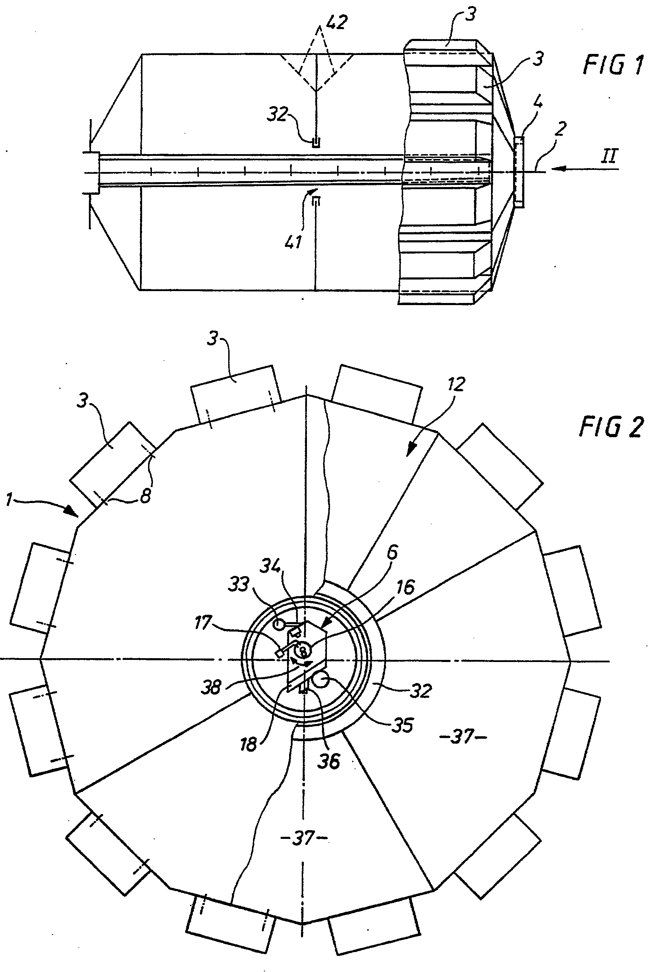

In Figur 1 ist schematisiert eine Dragiertrommel 1 gezeichnet, deren Lagerung und Außengehäuse der Einfachheit halber fortgelassen wurde.

An der einen Stirnseite der Dragiertrommel 1 ist ein Strömungsverteiler 4 angebracht, von dem Anschlußkanäle 3 ausgehen, welche parallel und in gegenseitigem Abstand in Richtung der Längsachse der Dragiertrommel sich erstrecken (vgl. Figur 2). Die Trocknungsluft wird über den Strömungsverteiler 4 in die Anschlußkanäle 3 eingespeist und gelangt über die Außenwand der Dragiertrommel 1 durchsetzende Durchbrechungen 8 in das Innere der Dragiertrommel 1.

Im Ausführungsbeispiel gemäß den Zeichnungen ist die Dragiertrommel 1 in zwei Trommelsektionen 10,11 unterteilt, wobei die Unterteilung durch eine quer zur Trommelachse 2 sich erstreckende Trennwand 12 gebildet ist.

Parallel zur Trommelachse 2 erstreckt sich ein Sprüharm 6 in Richtung der Längsachse der Dragiertrommel 1, wobei die Stirnansicht des Sprüharmes aus Figur 2 entnehmbar ist.

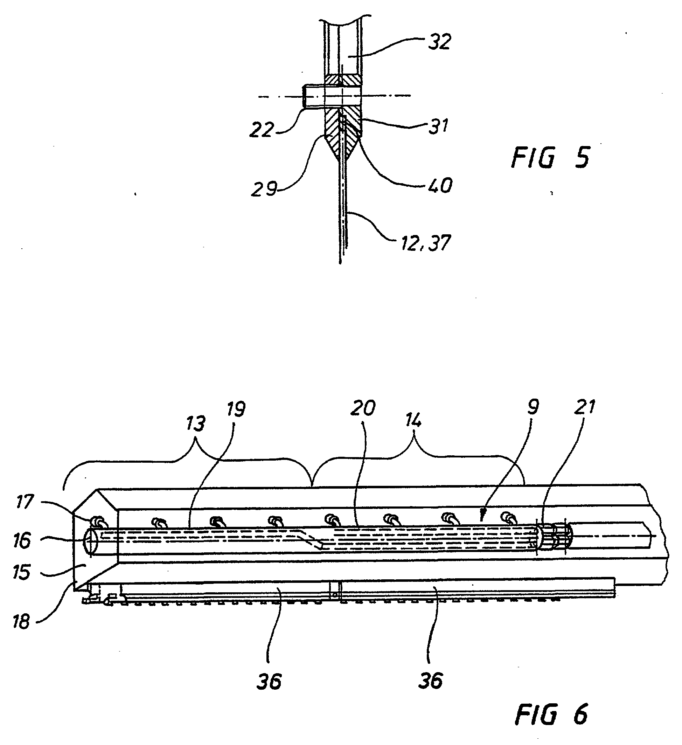

Der Sprüharm 6 besteht gemäß Figur 2 und Figur 6 aus einem in sich geschlossenen Gehäuse 15, in dem ein axial das Gehäuse 15 durchsetzender Düsenträger 16 vorhanden ist. Im Düsenträger 16 sind zwei voneinander getrennten Düsenrohre 19,20 angeordnet, welche über ein Anschlußstück 21 nach außen ausserhalb der Dragiertrommel 1 geführt sind. Auf diese Weise ist es möglich, den Sprühdüsen 17 der linken Sprüharmsektion 13 ein anderes Sprühmedium zuzuordnen als den in Figur 6 rechts gezeichneten Sprühdüsen 17 der rechten Sprüharmsektion 14.

An der Unterseite des Sprüharmes 6 sind noch Schokodüsenleisten 36 angebracht, um die zu beschichtenden Kerne ggf. mit einer Schokoladenschicht überziehen zu können.

Die Reinigungsvorrichtung wurde der besseren Übersichtlichkeit halber nur in Figur 2 dargestellt, nicht aber in Figur 6. Sie besteht aus einer an der oberen Innenseite des Gehäuses 15 angebrachten Reinigungsdüsenleiste 34, aus der ein Reinigungsmedium - in der Regel warmes Wasser - auf die Sprühdüsen 17 aufgebar ist.

Die Reinigung der Sprühdüsen 17 in den Beschichtungspausen erfolgt derart, daß der gesamte Düsenträger 16 in Pfeilrichtung 38 im Gehäuse 15 drehbar gelargert ist und die Sprühdüsen 17 gemäß Figur 2 im Uhrzeigersinn in das Gehäuse 15 zurückgeschwenkt werden, so daß deren Mündung genau der Mündung der jeweiligen Reinigungsdüsen der Reinigungsdüsenleiste 34 gegenüberliegt.

In der Sprühphase sind dabei die Sprühdüsen 17 aus nicht näher dargestellten Öffnungen im Gehäuse 15 aus diesem Gehäuse herausgeschwenkt und nimmt die in Figur 2 schematisiert dargestellte Lage ein. In der Reinigungsstellung werden die Sprühdüsen 17 durch Drehung des Düsenrohres 19 im Uhrzeigersinn (Pfeilrichtung 38) in das Gehäuse zurückgeschwenkt und die im Gehäuse angebrachten Durchbrechungen werden durch einen Verschlußschieber abgedichtet, so daß das Gehäuse hermetisch dicht abgeschlossen ist.

Das von der Reinigungsdüsenleiste 34 auf die Sprühdüsen 17 abgegebene Wasser wird in einer Bodenrinne 18 des Sprüharmes 6 aufgefangen und nach außen geleitet.

Zur Pulverbeschichtung kann es noch vorgesehen sein, daß unterhalb des Sprüharmes 6 eine Pulverdosiereinrichtung 35 vorgesehen ist, wobei wiederum pro Trommelsektion 10,11 eine zugeordnete Pulverdosiereinrichtung getrennt betrieben werden kann.

Um die Arbeitsweise der Sprühvorrichtung beobachten zu können, ist noch eine Beleuchtung 33 oberhalb am Sprüharm 6 angeordnet.

Die im Ausführungsbeispiel angegebene Düsenanordnung 9 der Sprühdüsen 17 an einem gemeinsamen Düsenträger 16 ist willkürlich. In anderen, nicht näher dargestellten, Ausführungsformen kann selbstverständlich die beschriebene Reinigungsvorrichtung entfallen und die Reinigung der Sprühdüsen erfolgt auf herkömmliche Weise.

Es kommt also nur darauf an, daß in der Dragiertrommel ein oder mehrere parallel zueinander angeordnete und einen gegenseitigen Abstand aufweisende Trennwände 12 angeordnet sind, welche zwischen sich und ggf. mit den Stirnseiten der Dragiertrommel 1 entsprechende Trommelsektionen 10, 11 bilden, denen jeweils eine Sprüharmsektion 13, 14 zur getrennten Behandlung der zu beschichtenden Kerne in der jeweiligen Trommelsektion 10,11 zugeordnet ist.

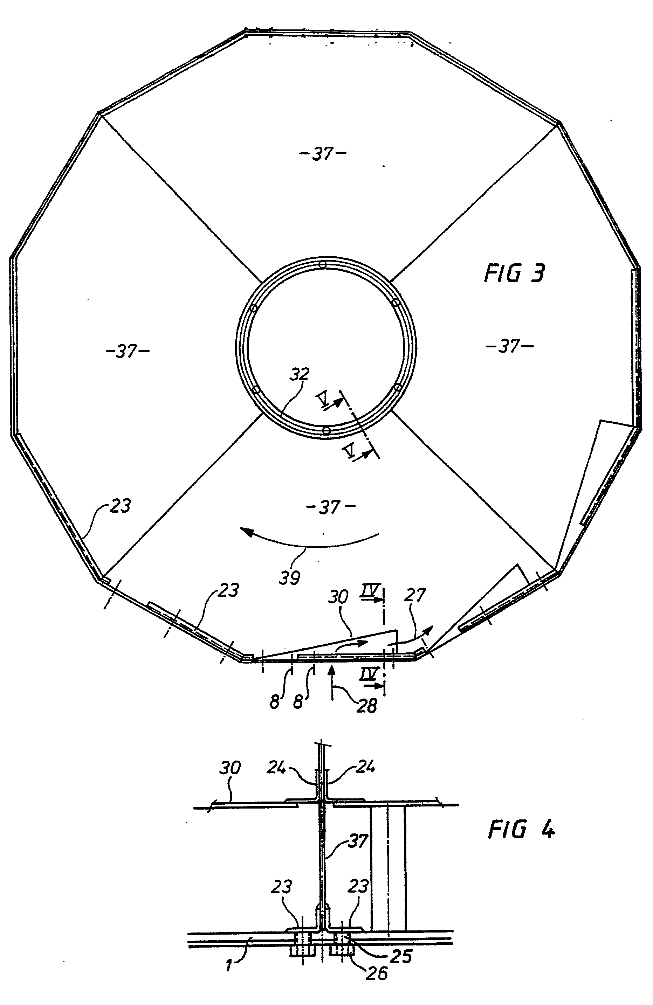

Gemäß Figur 2 und Figur 3 besteht die Trennwand 12 aus mehreren sektorförmigen Trennwandsektionen 37, die radial einwärts von einem U-förmig profilierten Befestigungsring 32 zusammengehalten werden. Gemäß Figur 5 besteht der Befestigungsring 32 aus zwei zueinander spiegelsymmetrischen Ringhälften 29,31, welche mit ihren Flachseiten aufeinander gelegt werden, wobei in der einen Ringhälfte 31 ein Befestigungsbolzen 22 befestigt ist, der durch eine entsprechende und zugeordnete Bohrung in der anderen Ringhälfte 29 greift und auf dieser Seite mit einer Hutmutter (nicht dargestellt) verbunden ist. Die beiden Ringhälften 29,31 bilden einen zirkular umlaufenden Aufnahmeraum 40, in den klemmend der Innenumfang der jeweiligen Trennwandsektion 37 aufgenommen ist.

An ihren Längsseiten stoßen die Trennwandsektionen 37 dicht gegeneinander und sind am Außenumfang an der Innenseite der Dragiertrommel 1 mit der in Figur 4 dargestellten Befestigung verbunden.

Hierbei sind an der Innenseite der Dragiertrommel 1 Haltewinkel 23 angeschraubt, wobei jeder Haltewinkel mit einem Gewindebolzen 25 verbunden ist, der die Wandung der Dragiertrommel 1 durchgreift und auf der gegenüberliegenden Seite mit einer Mutter 26 befestigt ist.

Die radial von der Innenwandung der Dragiertrommel 1 wegstehenden Schenkel der Haltewinkel 23 sind gegeneinander geneigt, so daß sie die jeweilig eingeschobene Trennwandsektion 37 klemmend festhalten.

Im Abstand von der wandseitigen Befestigung der Trennwandsektionen 37 sind noch über entsprechende Haltewinkel 24 Luftleitbleche 30 mit der Trennwandsektion 37 verbunden. In ihrem Berührungsbereich mit der Trennwandsektion 37 sind die Haltewinkel 24 mit der Trennwandsektion 37 verschweisst, während am anderen Schenkel des Haltewinkels 24 das Luftleitblech 30 bündig anliegt.

Gemäß Figur 3 hat das Luftleitblech 30 die Aufgabe, die in Pfeilrichtung 28 über die Durchbrechungen 8 in die Dragiertrommel 1 eintretenden Luftströme in Pfeilrichtung 27 umzuleiten und einen zirkular an der Innenseite der jeweiligen Trommelsektion entlang strömenden Luftstrom zu erreichen. Dieser Luftstrom hebt das zu beschichtende Material von der Trommelwand ab und führt es in die Mitte der jeweiligen Trommelsektion in Richtung auf die Trommelachse 2 , wo es dann wieder in Richtung zur Innenwand der Dragiertrommel 1 zurückfällt. Wichtig hierbei ist, daß die Dragiertrommel 1 in Pfeilrichtung 39 rotiert, so daß die in Pfeilrichtung 27 ausströmende Luft in der Lage ist, die am Boden der Dragiertrommel 1 sich ablagernden Kerne hochzuwirbeln und den Kreislauf zum nächsten Luftleitblech 30 zu führen.

Pro Trommelsektion 10, 11 wird ein Unterdruck erzeugt, so daß hierdurch vermieden wird, daß der Luftstrom der einen Trommelsektion 10,11 über den radialen Abstand 41, welcher der Befestigungsring 32 zum Außenumfang des Sprüharmes 6 hat, in die andere Trommelsektion 10,11 gelangt.

In einer Weiterbildung der vorliegenden Erfindung ist es vorgesehen, statt eines geraden Trennwandprofils (Figur 1) ein keilförmiges Trennwandprofil 42 vorzusehen, wie es in gestrichelter Darstellung in Figur 1 angegeben ist. Die Trennwand erstreckt sich hierbei vom radial einwärts gelegenen Befestigungsring 32 in Richtung radial auswärts etwa bis zur Mitte in gerader Form (wie in Figur 1), um dann von der Mitte her - radial auswärts gerichtet - keilförmig sich nach radial auswärts erweiternde Flächen zu bilden.

Auf diese Weise wird gewährleistet, daß das gegen die Trennwand 12 fallende Material wieder in Richtung zur Mitte der jeweiligen Trommelsektion 10,11 zurückgeführt wird.

ZEICHNUNGS-LEGENDE

1 Dragiertrommel
2 Trommelachse
3 Anschlußkanal
4 Strömungsverteiler

6 Sprüharm

8 Durchbrechung
10 Trommelsektion
11 Trommelsektion
12 Trennwand
13 Sprüharmsektion
14 Sprüharmsektion
15 Gehäuse
16 Düsenträger
17 Sprühdüse
18 Bodenrinne
19 Düsenrohr
20 Düsenrohr
21 Anschlußstück
22 Befestigungsbolzen
23 Haltewinkel
24 Haltewinkel
25 Gewindebolzen
26 Mutter
27 Pfeilrichtung
28 Pfeilrichtung
29 Ringhälfte
30 Luftleitblech
31 Ringhälfte
32 Befestigungsring
33 Beleuchtung
34 Reinigungsdüsenleiste
35 Pulverdosiereinrichtung
36 Schokodüsenleiste
37 Trennwandsektion
38 Pfeilrichtung
40 Aufnahmeraum
41 Abstand
42 Trennwandprofil

**Patentansprüche**

1. Dragiertrommel (1) mit einem Beschichtungsraum, der in axialer Richtung in mehrere Behandlungsräume (10, 11) zum getrennten Behandeln von zu beschichtenden Kernen unterteilt ist, ferner mit einem parallel zur Trommelachse (2) verlaufenden Sprüharm (6), an dem eine Düsenanordnung (9, 36) zum Besprühen der Kerne sowie ggf. eine Reinigungsvorrichtung zum Reinigen der Düsenanordnung (9, 36) vorgesehen ist, mit einer in die Trommel (1) mündenden Luftzufuhr (3, 8) und mit getrennten Sprüharmsektionen (13, 14) für die Behandlungsräume (10, 11), dadurch gekennzeichnet, daß die Behandlungsräume (10, 11) durch mehrere parallele, jeweils zwischen sich eine Trommelsektion (10, 11) abteilende, quer zur Achse (2) der Trommel (1) verlaufende Trennwände (12), die sich vom Innenumfang der Dragiertrommel (11) radial einwärts in Richtung zur Trommelachse (2) erstrecken, voneinander getrennt sind, daß die Luftzufuhr (3, 8) in jedem der Behandlungsräume (10, 11) einmündet, und die Luft von der Trommelaußenseite hin in Richtung radial zur Trommelachse derart eingeblasen wird, daß das Dragiergut in den mittleren Bereich jedes Behandlungsraumes (10, 11) geführt wird und daß jede Sprüharmsektion (13, 14) mit einer eigenen Sprühmittelzufuhr versehen ist.

2. Dragiertrommel nach Anspruch 1, **dadurch gekennzeichnet**, daß die Trennwand (12) aus einzelnen, sektorförmigen Trennwandsektionen (37) besteht.

3. Dragiertrommel nach Anspruch 1 oder 2, **dadurch gekennzeichnet**, daß die Trennwand (12) klemmend zwischen einander gegenüberliegenden Haltewinkeln (23), welche am Innenumfang der Dragiertrommel (1) befestigt sind, aufgenommen ist.

4. Dragiertrommel nach einem der Ansprüche 1 - 3, **dadurch gekennzeichnet**, daß die Trennwandsektionen (37) der Trennwand radial innen von einem Befestigungsring (32) aufgenommen sind, der in radialem Abstand (41) vom Außenumfang des Sprüharms (6) angeordnet ist.

5. Dragiertrommel nach Anspruch 1, **dadurch gekennzeichnet**, daß jeder Sprüharmsektion (13,14) eine separate und getrennt ansteuerbare Düsenanordnung (17,19; 17,20) zugeordnet ist, und daß für alle Sprüharmsektionen (13,14) eine gemeinsame Reinigungsvorrichtung (Reinigungsdüsenleiste 34) vorgesehen ist.

6. Dragiertrommel nach Anspruch 1, **dadurch gekennzeichnet**, daß alle Trommelsektionen (10,11) von einer gemeinsamen Luftversorgung beaufschlagt sind, die aus mehreren am Außenumfang der Dragiertrommel (1) angeordneten, parallelen und in axialer Richtung der Dragiertrommel sich erstreckenden Anschlußkanälen (3) besteht.

7. Dragiertrommel nach einem der Ansprüche 1 - 6, **dadurch gekennzeichnet**, daß die Trennwand (12) ein im Querschnitt keilförmiges Trennwandprofil (42) aufweist.

8. Dragiertrommel nach Anspruch 7, **dadurch gekennzeichnet**, daß das keilförmige Trennwandprofil (42) etwa von der Mitte der Trennwand (12) beginnend in radialer Richtung mit geneigter Fläche in Richtung zum Innenumfang der Dragiertrommel (1) ansteigend verläuft.

**Claims**

1. A sugar-coating drum (1) with a coating space which is divided in the axial direction into several processing spaces (10, 11) for the separate processing of cores to be coated, furthermore comprising a spraying arm (6) extending parallel to the drum axis (2), on which is provided a nozzle system (9, 36) for spraying the cores, as well as - if appropriate - a cleaning mechanism for cleaning the nozzle system (9, 36), with an air feed (3, 8) opening into the drum (1) and with separate spraying arm sections (13, 14) for the processing spaces (10, 11), characterised in that the processing spaces (10, 11) are separated from one another by means of several parallel partitions (12) extending transversely to the axis (2) of the drum (1) which between them each partition of a drum section (10, 11), and which extend radially inwards from the internal periphery of the coating drum (1) in the direction towards the drum axis (2), in that the air feed system (3, 8) opens into each of the processing spaces (10, 11) and the air is blown in from the outside of the drum in the radial direction towards the drum axis in such a way that the sugar-coating substance is directed into the central region of each processing space (10, 11) and in that each spraying arm section (13, 14) is provided with its own feed of spraying substance.

2. A sugar-coating drum according to claim 1, characterised in that the partition (12) comprises individual sector-shaped partition sections (37).

3. A sugar-coating drum according to claim 1 or 2, characterised in that the partition (12) is held gripped between mutually opposed securing angle pieces (23) which are fastened to the inner periphery of the coating drum (1).

4. A sugar-coating drum according to one of claims 1 to 3, characterised in that the partition sections (37) of the partition are secured radially on the inside by a fastening ring (32) which is situated with radial spacing (41) from the outer periphery of the spraying arm (6).

5. A sugar-coating drum according to claim 1, characterised in that each spraying arm section (13, 14) is associated with a separate and individually controllable nozzle system (17, 19; 17, 20) and that a common cleaning mechanism (cleaning nozzle bar 34) is provided for all the spraying arm sections (13, 14).

6. A sugar-coating drum according to claim 1, characterised in that all the drum sections (10, 11) are acted upon by a common air supply which comprises several connecting channels (3) extending parallel and in the axial direction of the coating drum, arranged on the outer periphery of the coating drum (1).

7. A sugar-coating drum according to one of the claims 1 to 6, characterised in that the partition (12) has a cross-sectionally wedge-shaped partitioning outline (42).

8. A sugar-coating drum according to claim 7, characterised in that the wedge-shaped partitioning outline (42) rises in the radial direction with the sloping surface in the direction towards the inner periphery of the coating drum (1) starting at about the centre of the partition (12).

**Revendications**

1. Tambour à dragéifier (1) comportant une chambre d'enrobage divisée dans le sens axial en plusieurs chambres de traitement (10, 11) pour traiter séparément des noyaux destinés à être enrobés, ainsi qu'un bras gicleur (6), parallèle à l'axe (2) du tambour, sur lequel sont montés un dispositif à buses (9, 36) pour asperger les noyaux, et éventuellement un dispositif de nettoyage pour nettoyer le dispositif à buses (9, 36), une alimentation d'air (3, 8) qui débouche dans le tambour (1) et des sections distinctes de bras gicleur (13, 14) pour les chambres de traitement (10, 11), caractérisé en ce que les chambres de traitement (10, 11) sont séparées les unes des autres par plusieurs cloisons parallèles (12) disposées transversalement à l'axe (2) du tambour (1), qui délimitent entre elles des sections respectives de tambour (10, 11) et qui s'étendant radialement vers l'intérieur, à partir de la périphérie intérieure du tambour à dragéifier (1), en direction de l'axe (2) du tambour, en ce que l'alimentation d'air (3, 8) débouche dans chacune des chambres de traitement (10, 11) et l'air est insufflé à partir du côté extérieur du tambour radialement en direction de l'axe du tambour de telle sorte que les produits à dragéifier sont amenés dans la zone médiane de chaque chambre de traitement (10, 11), et en ce que chaque section de bras gicleur (13, 14) est munie d'une alimentation propre en agent d'aspersion.

2. Tambour à dragéifier selon la revendication 1, caractérisé en ce que la cloison (12) se compose de différentes sections de cloison (37) en forme de secteurs.

3. Tambour à dragéifier selon la revendication 1 ou 2, caractérisé en ce que la cloison (12) est logée par serrage entre des équerres de retenue opposées (23) qui sont fixées à la périphérie intérieure du tambour à dragéifier (1).

4. Tambour à dragéifier selon l'une des revendications 1 à 3, caractérisé en ce que les sections (37) de la cloison sont maintenues radialement à l'intérieur par une bague de fixation (32) placée à une distance radiale (41) de la périphérie extérieure du bras gicleur (6).

5. Tambour à dragéifier selon la revendication 1, caractérisé en ce qu'un dispositif à buses (17, 19; 17, 20) distinct et à commande séparée est affecté à chaque section de bras gicleur (13, 14), et en ce qu'un dispositif de nettoyage (barre à buses de nettoyage 34) commun est prévu pour toutes les sections de bras gicleur (13, 14).

6. Tambour à dragéifier selon la revendication 1, caractérisé en ce que toutes les sections de tambour (10, 11) sont alimentées par une distribution d'air commune qui se compose de plusieurs canaux d'alimentation (3) parallèles, disposés à la périphérie extérieure du tambour à dragéifier (1) et s'étendant dans le sens axial du tambour à dragéifier.

7. Tambour à dragéifier selon l'une des revendications 1 à 6, caractérisé en ce que la cloison (12) présente un profil de cloison (42) cunéiforme en section transversale.

8. Tambour à dragéifier selon la revendication 1, caractérisé en ce que le profil de cloison cunéiforme (42) va en montant, sensiblement à partir du milieu de la cloison (12), dans le sens radial avec une surface inclinée en direction de la périphérie intérieure du tambour à dragéifier (1).

FIG 1

FIG 2

FIG 3

FIG 4

FIG 5

FIG 6